Europäisches Patentamt

European Patent Office

Office européen des brevets

(11) Publication number: **0 489 999 A1**

# EUROPEAN PATENT APPLICATION

(21) Application number: 90313615.8

(22) Date of filing: **13.12.90**

(51) Int. Cl.5: **F16H 61/00**

(43) Date of publication of application:
**17.06.92 Bulletin 92/25**

(84) Designated Contracting States:
**DE FR GB**

(71) Applicant: **MITSUBOSHI BELTING LTD.**
**No. 1-21, 4-Chome, Hamazoe-dori**
**Nagata-ku Kobe City Hyogo, pref.(JP)**

(72) Inventor: **Kanaoka, Tomizo**
**Aza-Miyanoshita, Kuruma, Suma-ku**
**Kobe, Hyogo(JP)**
Inventor: **Akao, Hideyuki**
**No. 193, Oaza-Hiokimae, Imazu-cho**
**Takashima-gun, Shiga(JP)**
Inventor: **Hioki, Katsuyuki**
**No. 4-16, 3-chome, Higashitarumi**
**Tarumi-ku, Kobe, Hyogo(JP)**
Inventor: **Aragane, Tosiaki**
**No. 23-10, 4-chome, Jonan-cho**
**Takatsuki-shi, Osaka(JP)**

(74) Representative: **Opperman, Stuart Richard et al**
**Haseltine Lake & Co. Hazlitt House 28**
**Southampton Buildings Chancery Lane**
**London WC2A 1AT(GB)**

(54) **Belt-type continuously variable transmission with variable speed pulley mechanism.**

(57) A belt-type continuously variable transmission (10) consisting of: an input shaft (12); an output shaft (18); a first variable speed pulley (20) on the input shaft (12) and having a first pulley part (24) fixed against axial movement relative to the input shaft (12) and a second pulley part (30) movable axially relative to the first pulley part (24), with the first and second pulley parts (26,30) defining a belt-receiving groove (38); a second variable-speed pulley (22) on the output shaft (18) and having a third pulley part (100) fixed against axial movement relative to the output shaft (18) and a fourth pulley part (102) movable axially relative to the third pulley part (100), with the third and fourth pulley parts (100,102) defining a belt-receiving groove (110), a fluid cylinder (68); means for shifting the second pulley part (30) axially relative to the first pulley part (24) in response to a change in pressure in the fluid cylinder (68); a fluid reservoir (40) on the first variable-speed pulley (20) for rotation with the input shaft (12); means (42) for sensing the rotational speed of the fluid in the fluid reservoir (40) as the input shaft (12) is operated; and means (86) for communicating the sensing means (42) with the fluid cylinder (68) to establish an equilibrium therebetween and to thereby vary the fluid pressure in the fluid cylinder (68) as an result of a change in the rotational velocity of the input shaft (12) and the fluid in the fluid reservoir (40).

EP 0 489 999 A1

FIG. I

The present invention relates to a belt-type continuously variable transmission with a variable-speed pulley mechanism for use as a continuously variable force transmission in a vehicle, such as an automobile and, more particularly, to a transmission with a variable-speed pulley mechanism having a fluid actuated movable pulley part that is shifted axially relative to a fixed pulley part to change the width of a belt-receiving groove defined therebetween in rapid response to a variation in the rotational velocity of a shaft carrying the variable-speed pulley mechanism.

Belt-type continuously variable transmissions for vehicles, such as automobiles, are known in the art. Typically, these transmissions employ a pair of variable-speed pulley mechanisms associated with spaced, parallel, input/drive and output/driven shafts. A V-belt, or other type belt, is trained around the variable-speed pulley mechanisms.

With the prior art variable-speed pulley mechanisms mounted on input and output shafts, force transmission is performed by varying the pitch diameters of the pulleys and, as a consequence thereof, the relative rotational velocities of the input and output shafts. In such systems, the output shaft may be used to drive accessories on automobiles, such as hydraulic pumps for power steering, alternators, etc.

Each variable-speed pulley has cooperating pulley parts defining variable width belt-receiving grooves. One of the cooperating pulley parts is normally fixed and the other axially movable relative thereto to set the width of the belt-receiving groove and the effective diameter of the variable-speed pulley.

The position of the movable pulley part is controlled in the art by a number of different mechanisms. It is known to provide discrete particles in a space bounded in part by the movable pulley part so that as the rotational velocity of the shaft increases, the centrifugal force on the discrete particles urges the particles radially outwardly and against the movable pulley part so that a component of that force shifts the movable pulley part relative to the fixed pulley part.

Typically, when the centrifugal-type shifting mechanism is employed on the variable-speed pulley on the input shaft, the cooperating output shaft has a variable-speed pulley with a movable pulley part that is spring biased towards a fixed pulley part.

An exemplary, centrifugal-type, variable-speed pulley mechanism is disclosed in Japanese Patent Publication No. 51-6815. In that structure, movable weights, such as steel balls, are placed in radial guide grooves and movable radially along the grooves in response to rotation of the variable-speed pulley.

The centrifugal-type transmission has several drawbacks. First, there is an insignificant axial force developed by the discrete particles at low speeds. On the other hand, with high speed rotation, the centrifugal force of the discrete particles increases in proportion to the square of the rotational speed of the pulley to produce oft times excessive forces, particularly when accessories are driven. The centrifugal-type transmissions are thus effectively operable only in relatively high speed environments. Accordingly, conventional variable speed pulley mechanisms operated by discrete particles moving under centrifugal force encounter difficulty when used at low speeds and often have undesirably large diameter pulleys. The pulley diameter on the input side is required to be quite large to allow gradual increase of the shifting force on the movable pulley part in response to an increase in the rotational velocity of the input shaft. Further, in the centrifugal-type variable pulley mechanisms, due to the resistance encountered in axially shifting the movable pulley parts against the belt to vary the width of the groove, there is a lag in the movement of the movable pulley such that the curve on the graph plotting variation of the output speed with respect to that of the input speed at the time of acceleration significantly differs from the corresponding curve during deceleration, i.e. there is a resulting hysteresis loss. In a vehicle in which there is a hysteresis loss, different output speed is obtained for the same input speed depending on whether the engine is accelerating or decelerating, which presents a problem in safety as well as operating performance.

In a centrifugal-type variable speed pulley mechanism, when the rotation of the input shaft increases, the rotational speed of the output shaft also increases. Accordingly, the rotational speed of the accessories, such as the hydraulic pump for controlling power steering, and the like, operated by the output shaft, also increases. While accessories are not generally adversely affected at lower speeds, excessive rotational forces at higher rotational speeds may cause rapid deterioration of the accessories and the belts connecting the accessories to the output shaft. There is also a significant energy loss resulting from the input shaft rotating at excessively high speeds.

Alternatively, hydraulic pressure can be utilized to shift the movable pulley parts towards the fixed pulley parts. An exemplary structure is shown in U.S. Patent No. 4,601,680. In that structure, the amount of oil supplied to effect shifting of the movable pulley parts is dictated by an electronic control unit.

There has recently been developed a continuously variable transmission mechanism in which a fluid reservoir rotates together with a rotary shaft. The variation of the flow speed of the fluid in the reservoir, indicative of the shaft speed, is detected by a pitot tube to control the position of the movable pulley parts. One exemplary structure is shown in Japanese Patent Laid-Open No. 59-222660.

Another continuously variable transmission is disclosed in UK Patent No. 1,525,674, in which a pitot tube is provided for sensing the increase in the rotational velocity of the shaft. The shaft carries a fluid reservoir in which the pitot tube is immersed. A pump and hydraulic control valve communicate with the pitot tube to generate a fluid pressure to move a movable pulley part relative to a fixed pulley part to thereby adjust the width of the belt-receiving groove.

In those transmissions utilizing hydraulic pressure, the amount of oil delivered is normally controlled by an electronic controller. A large amount of data is input to an electronic control unit. Several sensors are required for the data to be generated and the unit to operate effectively. The resulting structures are quite complicated and resultingly expensive, particularly when the hydraulic system interconnects both the input and output shafts.

The present invention is specifically directed to overcoming the above-enumerated problems in a novel and simple manner.

According to the invention, a belt-type continuously variable transmission is provided consisting of: an input/drive shaft with a rotational axis; an output/driven shaft with a rotational axis; a first variable speed pulley on the input/drive shaft and having a first pulley part fixed against axial movement relative to the input/drive shaft and a second pulley part movable axially relative to the first pulley part, with the first and second pulley parts cooperatively defining a belt-receiving groove; a second variable-speed pulley on the output/driven shaft and having a third pulley part fixed against axial movement relative to the output/driven shaft and a fourth pulley part movable axially relative to the third pulley part, with the third and fourth pulley parts cooperatively defining a belt-receiving groove; a fluid cylinder; structure for shifting the second pulley part axially relative to the first pulley part in response to a change in pressure in the fluid cylinder; a fluid reservoir on the first variable-speed pulley for rotation with the input/drive shaft; structure for sensing the rotational speed of the fluid in the fluid reservoir as the input/drive shaft is operated; and structure for communicating the sensing structure with the fluid cylinder to establish an equilibrium therebetween and to thereby vary the fluid pressure in the fluid cylinder as an incident of a change in the rotational velocity of the input/drive shaft and the fluid in the fluid reservoir.

It is a principal objective of the present invention to afford a transmission, particularly adaptable to driving accessories on an automobile engine, with variable speed pulleys that rapidly respond to a variation in the rotational velocity of the input/drive shaft.

Preferably, the fluid cylinder and fluid reservoir are in direct fluid communication through the sensing structure so that prompt pressure variation in the fluid cylinder results from a change in the rotational velocity of the input/drive shaft.

The inventive structure also substantially eliminates hysteresis loss, i.e. to produce a proportional/linear relationship between the speed of the input and output shafts during acceleration and deceleration. To achieve this end, the sensing structure consists of a pitot tube with an inlet end that is located in the fluid reservoir. The invention contemplates repositioning of the inlet opening on the pitot tube relative to the fluid reservoir to produce a range of speeds for the output shaft for a given speed of the input shaft. It is thus possible to avoid excessive output speeds on accessories that otherwise results in energy loss and potential damage to the accessories and/or belts. Pitot tube repositioning is carried out externally of the transmission to preferably reduce the pitot tube/fluid cylinder pressure as the rotational velocity of the input/drive shaft increases. Preferably, the inlet opening is movable radially and/or the angle of the inlet opening is variable with respect to the fluid flow direction. By repositioning the inlet opening in a radial direction, the inlet opening can be placed selectively in fast and slow moving fluid, depending upon the sensitivity that is desired. By changing the angle of the inlet opening with respect to the fluid flow, the effective cross-sectional area of the inlet opening can be varied, as can the angle at which the fluid flow impinges on the opening, to selectively increase/decrease pitot tube/fluid chamber pressure. The pressure of the fluid in the fluid cylinder is proportional to the square of the rotational velocity. By controlling the pitot tube orientation, the rotational velocity/pressure relation can be altered.

In a preferred form, the pitot tube has an elongate body and an arm that is transverse to the length of the body and in which the inlet opening is provided. Structure is provided to pivot the body around its lengthwise axis so that the angular orientation of the arm can be varied relative to the fluid flow direction. Preferably, the angle between the arm and body is greater than 90° and less than 180°.

Still further, to avoid any turbulent effect on the fluid flow and any significant damping of rotation of the inlet/drive pulley, the pitot tube is made with a streamlined configuration. In a preferred form, the pitot tube has a curved configuration that is narrow at its leading end and widens away therefrom.

To provide maximum response to the fluid pressure, the pitot tube is provided with an elliptical cross section at the inlet opening. The opening has a radial and circumferential dimension. Preferably, the circumferential dimension is greater than the radial dimension so that substantially all of the flow intercepted

EP 0 489 999 A1

by the inlet opening is high speed flow. In a preferred form, the plane of the opening is perpendicular to the flow direction.

The invention also contemplates structure for continuously supplying fluid to the fluid reservoir. A pan is provided at the bottom of the transmission to collect fluid that falls out of the reservoir. The invention contemplates recycling the collected fluid back to the reservoir. In one version, the collected fluid flows into a tank and is from there pumped directly into the reservoir.

The recycling oil also serves as an effective lubricant for the system.

The invention also contemplates the provision of a coil spring to bias the second pulley part axially relative to the first pulley part so as to tend to diminish the belt-receiving groove therebetween to augment the pressure from the fluid cylinder. A stopper element is fixedly attached to the input/drive shaft. The coil spring is biasably positioned between the stopper and the second pulley part. The transmission can be used to drive automobile accessories, operable at slow speeds. At slow speeds, the coil spring exerts the necessary bias on the second pulley part.

Another aspect of the invention is the provision of structure for rapidly and positively urging the fourth pulley part axially relative to the third pulley part so as to diminish the width of the belt-receiving groove defined therebetween under the influence of a large torque on the output pulley. A similar stopper is provided on the output/driven shaft with a coil spring interposed between the stopper and movable pulley part on the output/driven shaft.

To further increase the bias on the movable pullay part on the output/driven shaft, cooperating cam structure is provided on the fourth pulley part and one of the output/driven shaft and third pulley part. Under high load/high torque conditions, the fourth pulley part tends to rotate relative to the third pulley part/output shaft as the belt drives the output pulley, which results in a camming action that shifts the fourth pulley part axially towards the third pulley part to augment the bias force from the coil spring. This places the transmission in a low speed/high torque state, which is desirable at startup and with a large load on the output shaft.

The inventive structure is effectively operable at even slow speeds with small diameter pulleys. The orientation of the pitot tube inlet opening can be correlated with the acceleration/deceleration of the input/drive shaft to adapt the device to many diverse environments.

Fig. 1 is a section view of a belt-type continuously variable transmission according to the present invention including variable-speed pulleys on input/drive and output/driven shafts;

Fig. 2 is an enlarged, fragmentary, perspective view of cooperating cam drive structure on a movable pulley part on the variable pulley on the output side and a stopper element fixed to the output/driven shaft;

Fig. 3 is an enlarged section view of one of the pulley parts of the Fig. 1 transmission taken along line 3-3 of Fig. 1 and showing a fluid reservoir thereon and a pitot tube for sensing the velocity of fluid in the reservoir;

Fig. 4 is a view similar to that in Fig. 3 with a modified form of pitot tube control;

Fig. 5 is an enlarged perspective view of a preferred form of pitot tube for use in the inventive structure;

Fig. 6 is a section view of the pitot tube taken along line 6-6 of Fig. 5;

Fig. 7 is a section view of the pitot tube taken along line 7-7 of Fig. 5;

Fig. 8 is an enlarged elevation view of an alternative form of pitot tube; and

Fig. 9 is a view as in Fig. 8 of a further alternative form of pitot tube.

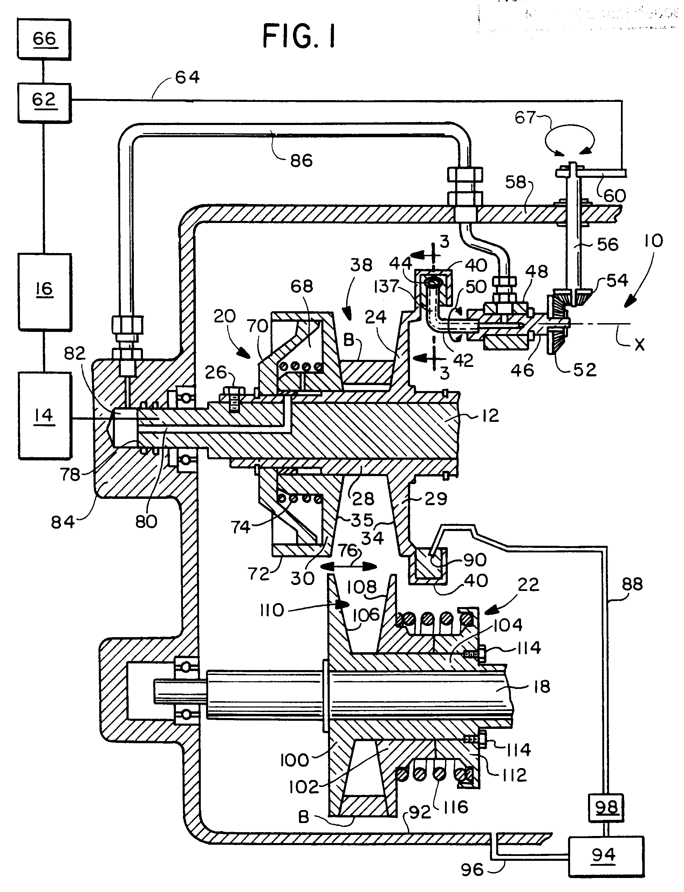

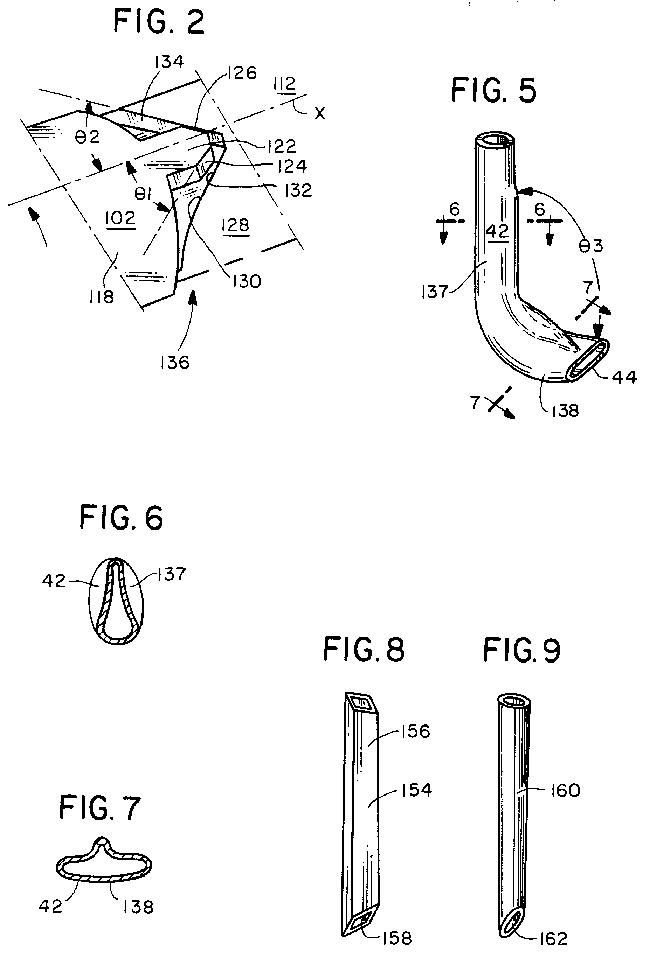

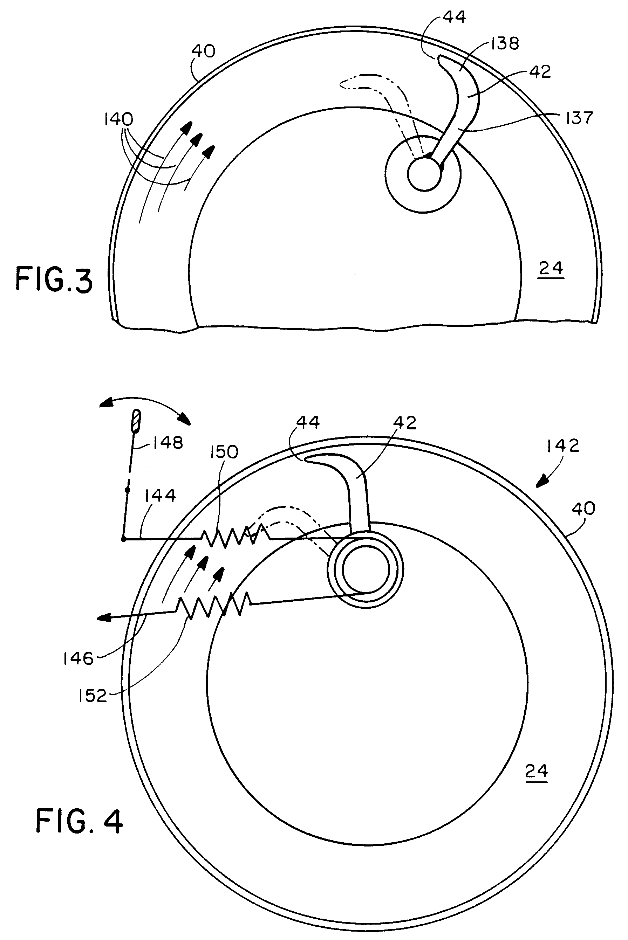

A belt-type continuously variable transmission, in accordance with the present invention, is shown at 10 in Fig. 1, with certain structural details of the transmission 10 shown in Fig. 2. The transmission 10 is designed for use as a continuously variable transmission mechanism (CVT) in an automobile, or in other environments in which (a) an input/drive shaft 12, connected indirectly to the crank shaft 14 of an engine 16, and an output/driven shaft 18, reside in parallel relationship, and (b) a force transmission belt B is operatively connected between variable-speed pulleys 20 and 22, mounted respectively on the input/drive shaft 12 and the output/driven shaft 18.

The variable-speed pulley 20, mounted to the input/drive shaft 12, has a first pulley half 24 fixed to the input/drive shaft 12 by means of a bolt 26. The bolt 26 extends through a sleeve 28, integrally formed with a radially extending flange 29 on the pulley half 24 and surrounding the input/drive shaft 12, and into the input/drive shaft 12. Splines, a key and slot, or other known cooperating structures, can be used on the pulley half 24 and input/drive shaft 12 to effect this connection.

The pulley 20 has a second, movable pulley half 30 mounted on the sleeve 28 on the first pulley half 24. The pulley half 30 is fixed against rotation relative to the sleeve 28 by splines or a key(s) cooperating between the sleeve 28 and pulley half 30. The pulley halves 24,30 have facing surfaces 34,35, respectively, cooperatively defining a belt receiving groove 38.

5

On the peripheral portion of the first pulley half 24 is a ring-shaped fluid reservoir 40. At least one pitot tube 42 is provided with its tip opening 44 extending into the fluid reservoir 40. The pitot tube 42 detects the flow speed and pressure of the fluid inside the fluid reservoir 40, which is indicative of the rotational velocity of the pulley half 24 and input/drive shaft 12.

The pitot tube 42 is connected to a rotary housing 46 which is journaled for rotation in a fixed support block 48. The pitot tube 42 is rotatable with the housing 46 about an axis X that is generally parallel to the axis of the input/drive shaft 12, as indicated by double-headed arrow 50.

The rotary housing 46 is provided at its one end with a bevel gear 52 in mesh with a transverse bevel gear 54 carried on a shaft 56 projecting through and externally of the transmission housing 58. A lever 60 is fixed at the end of the rotary shaft 56 projecting out of the housing 58. The lever 60 is connected to the throttle 62 of the engine 16 by means of a cable 64. The lever 60 turns in response to a change of position of the automobile accelerator pedal 66, which controls the throttle 62. Movement of the pedal 66 pivots the lever 60, as indicated by double-headed arrow 67, and in turn the shaft 56 and housing 46 through the bevel gears 52,54 to reposition the tip opening 44 of the pitot tube 42 in the reservoir 40.

A hydraulic cylinder 68 is provided adjacent to the movable pulley half 30. The hydraulic cylinder 68 is defined by a plate/stop member 70 fixed to the sleeve 28. A sleeve-like peripheral wall 72 on the movable pulley half 30 closely surrounds the radially outermost portion of the plate member 70. A coil spring 74 acts between the plate member 70 and movable pulley half 30 and normally biases the pulley half 30 so as to diminish the width of the groove 38, i.e. left-to-right in Fig. 1. The internal pressure of the hydraulic cylinder 68 varies in accordance with the increase or decrease in the amount of fluid, such as oil, serving as the pressure transmitting medium to move the movable pulley half 30 in the line of the double-headed arrow 76 in Fig. 1. The peripheral portion of the plate member 70 may be provided with a packing (not shown) to seal between adjacent surfaces on the peripheral wall 72 and plate member 70 to retain the fluid/oil in the cylinder 68.

The hydraulic cylinder 68 communicates with the end 78 of the input/drive shaft 12 via fluid path 80 bored axially through the input/drive shaft 12. The path 80 opens into a cavity 82 in a bearing portion 84 of the housing 58. The cavity 82 in the housing 58 communicates in turn with the rotary housing 46 via hydraulic line 86. Fluid from the hydraulic cylinder 68 communicates consecutively through the fluid path 80, the cavity 82, the hydraulic line 86 and rotary housing 46 to the pitot tube 42 and fluid reservoir 40.

With the above construction, the fluid inside the fluid reservoir 40 flows into or out of the tip opening 44 of the pitot tube 42 to continually adjust the internal pressure of the hydraulic cylinder 68, as dictated by the rotational velocity of the input/drive shaft 12.

A fluid supply conduit 88 recycles fluid through a discharge opening 90 into the reservoir 40. The fluid, such as oil, collects at the bottom 92 of the transmission housing 58, flows by gravity therefrom into a tank 94 via a pipe 96 and is propelled by a pump 98 from the tank 94 through the supply conduit 88 and discharged at the end 90 thereof into the reservoir 40. The fluid flowing out of the fluid reservoir 40 falls under the force of gravity against the bottom 92 of the housing 58 where it is accumulated.

The variable-speed pulley 22 mounted to the output/driven shaft 18 consists of a first pulley half 100 suitably fixed to the output/driven shaft 18 and a movable pulley half 102 mounted on a sleeve 104 which is integrally formed with the first pulley half 100, surrounds the output/driven Shaft 18 and is suitably fixed thereto. The pulley halves 100,102 have axially facing surfaces 106,108, respectively cooperatively defining a groove 110 for reception of the belt B. The movable pulley half 102 is slidable axially along the sleeve 104 on the fixed pulley half 100. A flange-shaped stopper 112 is fixed to the fixed pulley half 100 by means of bolts 114 adjacent to the movable pulley half 102. A coil spring 116 is mounted between the stopper 112 and the movable pulley half 102 and exerts a bias tending to shift the movable pulley half 102 toward the fixed pulley half 100, i.e. right-to-left in Fig. 1 so as to diminish the width of the groove 110.

As seen in Fig. 2, the movable pulley half 102 has a cylindrical axial extension 118 which is provided with at least one projection 122. The projection 122 has oppositely inclined side surfaces 124,126 respectively making angles of $\theta_1$ and $\theta_2$, with a lengthwise axis X, in the range of 20° to 50°. The angles $\theta_1$ and $\theta_2$ ordinarily have different values, however they may have the same value. The stopper 112 has a cylindrical extension 128 at the axial end of which a V-shaped notch 130 is formed having inclined surfaces 132,134, to be respectively abutted to the inclined side surfaces 124,126 of the projection 122. With the above construction, the extension 118 of the movable pulley half 102 is engaged with the extension 128 of the stopper 112 with the projection 122 thereon engaged within the notch 130 in the stopper 112.

The above construction forms a cam torque transmitting section 136 to transmit torque from the input/drive shaft 12 to the output/driven shaft 18. When the movable pulley half 102 is rotated by the belt B, the projection 122 on the extension 118 of the movable pulley half 102 is engaged within the notch 130 on the extension 128 of the stopper 112 with the inclined surfaces 124,126 facially abutted to the inclined surfaces 132,134, respectively, to transmit torque from the movable pulley half 102 through the stopper 112 to the output/driven shaft 18. The axial force component produced by the cammed engagement between the inclined surfaced 124,126 and the inclined surfaces 132,134 of the torque transmitting section 136, in combination with the resilient bias force of the spring 116, results in a drive force from the belt B being positively imparted to the variable speed pulley 22 and resultingly the output/driven shaft 18.

The belt-type continuously variable transmission 10 operates to obtain an appropriate speed variance ratio for the pulleys 20,22 by varying the internal pressure of the hydraulic cylinder 68 in response to a change in the rotational velocity of the input/drive shaft 12 and the load on the output/driven shaft 18.

The spring 74 within the hydraulic cylinder 68 assists the operation of the movable pulley half 30 to make the acceleration curve closer to an idealistic proportionally-increasing straight line. The spring 74 is not always necessary when the variation in the speed range is narrow.

When the rotational velocity of the input/drive shaft 12 is small, the flow speed and pressure of the fluid detected by the pitot tube 42 is relatively small, which results in a relatively small internal pressure in the hydraulic cylinder 68, as well as a relatively small axial shifting force on the movable pulley half 30. On the other hand, when the torque exerted on the output/driven shaft 18 is greater, the movable pulley half 102 on the variable-speed output pulley 22 mounted to the output/driven shaft 18 receives a greater drive force that acts on the movable pulley half 102 to cam the surfaces 124,126 more positively against the surfaces 132,134 to increase the right-to-left bias on the pulley half 102 in Fig. 1. This bias, in combination with the force of the coil spring 116, diminishes the width of the groove 110 to draw the belt B deeper into the groove 38 on the input side of the system, resulting in a high torque/low speed drive.

When the input/drive shaft 12 increases its rotational velocity, the pitot tube 42 detects a corresponding increase in the flow speed and pressure of the fluid in the reservoir 40. Flow of fluid to the cylinder 68 increases as does the internal pressure therein. The result is that the movable pulley half 30 moves from left-to-right in Fig. 1 relative to the fixed pulley half 24. This diminishes the width of groove 38, wedging the belt B radially outwardly on the input side to produce a low torque/high speed drive.

When the rotational velocity of the input/drive shaft 12 is reduced, the internal pressure of the hydraulic cylinder 68 is greater than the pressure detected by the pitot tube 42 so that the fluid in the hydraulic cylinder 68 is bled off, primarily through the tip opening 44 of the pitot tube 42. As a result, the internal pressure of the hydraulic cylinder 68 adjusts to an appropriate value corresponding to the rotational velocity of the input/drive shaft 12 to position the belt B to set the appropriate pitch diameters on the variable-speed pulleys 20,22, i.e. the belt B moves radially into the groove 38 on the input side and out of the groove 110 on the output side. The fluid which has been drawn off from the cylinder is collected in the housing bottom 92 to be recycled.

When the lever 60 is turned in the above-mentioned embodiment, the pitot tube 42 turns around the axis X to alter the angle of the tip opening 44 with respect to the fixed pulley half 24 and the direction of fluid flow. As described more fully below, the pitot tube 42 has preferably an L-shaped configuration with a radially projecting body 137 and a transverse arm 138 at the free end of which the opening 44 is defined (see Fig. 3). By operating the lever 60, through the accelerator pedal 66, the sensitivity to the oil pressure variation in the hydraulic cylinder 68 can be controlled. When the accelerator pedal 66 is held in a fixed position, as when cruising, the pitot tube 42/arm 138 is situated in the solid line position of Fig. 3. When the accelerator pedal 66 is stepped on, as during rapid acceleration, the pitot tube 42 moves to the phantom position in Fig. 3. The flow direction of the fluid in the fluid reservoir 40 is circumferential, as indicated by arrows 140 in Fig. 3.

The flow velocity of the fluid is higher radially outwardly in the reservoir 40. When the accelerator pedal 66 is depressed, the opening 44 of the pitot tube 42 is also put in the operating fluid at a changed angle with respect to the flow direction of the operation fluid. The speed of the fluid intercepted by the tube opening 44 in the phantom position is slower than that with the tube opening 44 in the solid line position therefor in Fig. 3. Accordingly, the internal pressure in the pitot tube 42 is reduced by depressing the accelerator pedal 66 compared to the cruising position therefor. Reduction in the internal pitot tube pressure causes the pressure in the hydraulic cylinder 68 to reduce to thereby move the movable pulley half 24 away from the fixed pulley half 30 to thereby move the belt B radially inwardly of the groove 38 for high torque/low speed drive.

The above structure is desirable in that it simultaneously alters the angle of the pitot tube 42 with respect to the flow direction of the fluid and the radial position of the pitot tube tip opening 44. The invention also contemplates moving the pitot tube 42 radially in a straight line so that the fluid impinges on the pitot tube opening 44 at the same angle regardless of the radial location thereof, i.e. the position of the accelerator pedal 66. Alternatively, by making the body 137 of the pitot tube 42 in Fig. 3 shorter, and changing its location, it is possible to alter only the flow direction of the fluid relative to the tip opening 44 without significantly varying the speed of the fluid thereat.

Fig. 4 shows a modified mechanism 142 for moving the pitot tube 42 in the fluid reservoir 40. The mechanism at 142 in Fig. 4 accounts for movement of the movable pulley half 24 precisely in proportion to a change in the rotational velocity of the pulley 20. In the mechanism 142 in Fig. 4, the pitot tube 42 is mounted in the fluid reservoir 40 and is mounted for pivoting movement between the solid line and phantom positions. The pitot tube 42 is carried on the rotary shaft/housing 46. Wires 144 and 146 are connected to the shaft 46. By pulling the wires 144 and 146, the shaft 46 can be rotated. The wire 144 is connected to a shift lever 148 via a spring 150, while the wire 146 is connected to the accelerator pedal 66 via a spring 152.

With the pulley 20 rotating at a slow speed, the pitot tube 42 is in the solid line position of Fig. 4 by reason of the balance of forces from the spring 150 and the spring 152. When the rotational speed of the pulley 20 increases, pressure detected by the pitot tube 42 increases. The pitot tube 42 is pivoted into the phantom position by reason of the increased fluid flow pressure. Resultingly, the tip opening 44 of the pitot tube 42 turns by a certain angle in the flow direction of the fluid to reduce the effective diameter of the opening 44. Consequently, the pressure in the pitot tube 42 reduces to fluctuate around a certain value proportional to the rotation speed of the pulley 20 under the influence of the increasing centrifugal force.

To maximize incoming fluid pressure in the pitot tube 42, it is preferable to form the pitot tube 42 as shown in Figs. 1 and 3-7, with a non-uniform cross section and an elliptical cross section at the open end thereof. A preferred bending angle $\theta_3$ for the pitot tube 42 is in the range of 105° to 112.5°. It is further desirable for the pitot tube 42 to have a streamlined shape in the fluid, as shown clearly in Figs. 5-7, so that the pitot tube 42 does not significantly impede the fluid stream through the fluid reservoir 40.

The following describes fluid pressure values using pitot tubes of different shape. Three types of pitot tubes were tested. First, the pitot tube 42, as shown in Figs. 1 and 3-7, was tested with the tip opening 44 opening in the flow direction of fluid. Second, pitot tube 154, shown in Fig. 8, was tested with a straight body and a rhomboidal cross section, with the tip opening 158 cut at an angle of 45° to be inserted in the fluid reservoir 40 perpendicular to the flow direction of the fluid. Third, pitot tube 160, as shown in Fig. 9, was tested and has the same construction as the second experimental pitot tube 154 except that it has a round cross section, with a resulting elliptical tip opening 162.

Each of the three experimental pitot tubes 42, 154,160 was inserted in a fluid reservoir which was 158 mm in radial extent from the shaft center to the periphery of the fluid, 30 mm in axial width, and 29 mm in radial height, with the tip openings 44,158,162 of the pitot tubes 42,154,160 put in the fluid reservoir 0.5 mm from the periphery of the fluid to measure the maximum pitot pressure. The results of the test are shown in Table 1 below. The fluid was an oil identified as Mulpus #10 and made by NIP-PON OIL Co., Ltd. The rotational velocity of the pulley carrying the reservoir was 2600 r.p.m.

TABLE 1

| Shape of Pitot Tube | Maximum Pitot Pressure (kg/cm) |
|---|---|
| Pitot tube 42 | 2.30 |
| Pitot tube 154 | 1.40 |
| Pitot tube 160 | 1.45 |

As is apparent from Table 1, the pitot tube 42 having the preferred configuration shown in Figs. 1 and 3-7, obtained a pitot pressure higher than that obtained by each of the other pitot tubes 154,160.

Each of the pitot tubes 154,160, as shown in Figs. 8 and 9, has an opening 158,162 that is elongate in a radial direction and therefore receives fluid both at a faster stream portion and at a slower stream portion. The pitot tube in accordance with the present invention, as shown in Figs. 1 and 3-7, because of the flat nature of the tip opening 44, as is most apparent from Fig. 7, receives the fluid primarily at only the faster stream portion.

The foregoing disclosure of specific embodiments is intended to be illustrative of the broad concepts comprehended by the invention.

**Claims**

1. A belt-type continuously variable transmission comprising:
   an input/drive shaft with a rotational axis;

EP 0 489 999 A1

an output/driven shaft with a rotational axis;

a first variable speed pulley on the input/drive shaft and having a first pulley part fixed against axial movement relative to the input/drive shaft and a second pulley part movable axially relative to the first pulley part, said first and second pulley parts having facing surfaces cooperatively defining a belt-receiving groove;

a second variable speed pulley on the output/driven shaft and having a third pulley part fixed against axial movement relative to the output/driven shaft and a fourth pulley part movable axially relative to the third pulley part, said third and fourth pulley parts having facing surfaces cooperatively defining a belt-receiving groove;

a fluid cylinder;

means for shifting the second pulley part axially relative to the first pulley part in response to a change in pressure in the fluid cylinder;

a fluid reservoir on the first variable speed pulley for rotation with the input/drive shaft;

means for sensing the rotational speed of the fluid in the fluid reservoir as the input/drive shaft is operated; and

means for communicating fluid in the sensing means to the fluid cylinder to thereby vary the fluid pressure in the fluid cylinder as an incident of a change in the rotational velocity of the input/drive shaft and the fluid in the fluid reservoir.

2.    The belt-type continuously variable transmission according to claim 1 including means for continuously supplying fluid to the fluid reservoir.

3.    The belt-type continuously variable transmission according to claim 1 in combination with a belt trained about said first and second variable speed pulleys.

4.    The belt-type continuously variable transmission according to claim 1 wherein said speed sensing means comprises a pitot tube with an inlet opening and means are provided for selectively repositioning the inlet opening with respect to the fluid reservoir.

5.    The belt-type continuously variable transmission according to claim 1 wherein said second pulley part is movable axially relative to the first pulley part to diminish the width of the belt-receiving groove on the first variable speed pulley as an incident of the rotational velocity of the input/drive shaft increasing which in turn causes a corresponding increase in the fluid pressure in the fluid cylinder.

6.    The belt-type continuously variable transmission according to claim 1 including spring means for normally biasing the second pulley part towards the first pulley part to diminish the width of the belt-receiving groove on the first variable speed pulley.

7.    The belt-type continuously variable transmission according to claim 6 wherein there is a stopper element/plate member on the input/drive shaft and the biasing means comprises a coil spring interposed between the stopper element and the second pulley part.

8.    The belt-type continuously variable transmission according to claim 1 wherein the speed sensing means includes a pitot tube and means for establishing a fluid communication path directly between said fluid reservoir and fluid cylinder at least partially through said input/drive shaft.

9.    The belt-type continuously variable transmission according to claim 1 including a housing for said transmission, said housing having a pan for collecting fluid from the fluid reservoir and means are provided for recycling fluid from said pan back to said reservoir.

10.    The belt-type continuously variable transmission according to claim 1 wherein said second variable speed pulley includes means normally biasing the fourth movable pulley part towards the third movable pulley part so as to diminish the belt-receiving groove on the second variable speed pulley.

11.    The belt-type continuously variable transmission according to claim 10 including cooperating cam means on the fourth pulley part and one of the output/driven shaft and third pulley part for moving the fourth pulley part toward the third pulley part as an incident of the fourth pulley part rotating relative to the one of the output/driven shaft and third pulley part.

9

**12.** A variable speed pulley comprising:

a shaft having a rotational axis;

a first pulley part;

a second pulley part;

means for mounting the first and second pulley parts to the shaft so that the first and second pulley parts cooperatively define a belt-receiving groove and so that at least one of the first and second pulley parts is movable relative to the other of the first and second pulley parts to selectively enlarge and diminish the width of the belt-receiving opening;

a fluid reservoir;

means for mounting the fluid reservoir to at least one of the first and second pulley parts and shaft so that the reservoir follows rotational movement of the shaft;

a fluid cylinder;

means for sensing the rotational speed of fluid in the fluid reservoir and for varying the pressure of fluid in the fluid cylinder in response to variation in the rotational speed of fluid in the fluid reservoir,

said sensing and varying means including a pitot tube with an inlet opening and means for repositioning the inlet opening relative to the fluid reservoir; and

means for relatively repositioning the first and second pulley parts in response to a variation in pressure in the fluid cylinder.

**13.** The belt-type continuously variable transmission according to claim 12 wherein means are provided for establishing direct fluid communication between the fluid reservoir and fluid cylinder.

**14.** The belt-type continuously variable transmission according to claim 12 including spring means for normally biasing one of the first and second pulley parts relative to the other of the first and second pulley parts.

**15.** The belt-type continuously variable transmission according to claim 12 wherein the pitot tube has an arm with the inlet opening therein and said repositioning means includes means for altering the radial location of the arm inlet opening relative to the fluid reservoir.

**16.** The belt-type continuously variable transmission according to claim 12 wherein the pitot tube has an elongate arm with the inlet opening therein and said repositioning means includes means for altering the orientation of the arm and thus the inlet opening with respect to the flow of fluid passing the arm as the shaft is rotated.

**17.** The belt-type continuously variable transmission according to claim 12 wherein the pitot tube has an inlet opening and said repositioning means includes means for altering both the radial location of the inlet relative to the fluid reservoir and the orientation of the inlet opening with respect to the flow of fluid passing the arm as the shaft is rotated.

**18.** The belt-type continuously variable transmission according to claim 12 wherein the pitot tube has a non-circular cross section along at least a part of its length.

**19.** The belt-type continuously variable transmission according to claim 18 wherein the pitot tube inlet opening has a radial dimension and a circumferential dimension and the inlet opening is larger in the circumferential direction than in the radial direction.

**20.** The belt-type continuously variable transmission according to claim 12 wherein the pitot tube is formed in an L-shape.

**21.** The belt-type continuously variable transmission according to claim 20 wherein the L-shaped pitot tube has an elongate body and a transverse arm and the arm make an angle with the body that is greater than 90° and less than 180°.

**22.** The belt-type continuously variable transmission according to claim 12 in combination with a pressure adjusting means for selectively controlling the fluid pressure in the fluid cylinder.

**23.** The belt-type continuously variable transmission according to claim 12 including means for collecting fluid escaping from the fluid reservoir.

24. The belt-type continuously variable transmission according to claim 23 including means for recycling fluid from the collecting means back to the fluid reservoir.

25. The belt-type continuously variable transmission according to claim 12 in combination with an output/driven shaft having a variable speed pulley.

# FIG. 1

# FIG. 2

# FIG. 5

# FIG. 6

# FIG. 7

# FIG. 8

# FIG. 9

FIG.3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2802367 (HOOVER)<br>* column 2; figure 1 *<br>--- | 1, 3 | F16H61/00 |
| A,D | PATENT ABSTRACTS OF JAPAN<br>vol. 9, no. 98 (M-375)(1821) 27 April 1985,<br>& JP-A-59 222660 (FUJI) 14 December 1984,<br>* the whole document *<br>--- | 1, 3, 4,<br>8, 12,<br>15-17,<br>20 | |
| A | US-A-4976657 (HIROSHI TAKANO)<br>* abstract; figure 1 *<br><br>--- | 1, 2, 6,<br>10, 11,<br>14, 25 | |
| A | EP-A-0272108 (FUJI)<br>* abstract; figures 3-5 *<br><br>----- | 1-4, 8,<br>9, 12,<br>18-20,<br>22-25 | |

TECHNICAL FIELDS
SEARCHED (Int. Cl.5 )

F16H

The present search report has been drawn up for all claims

| Place of search | Date of completion of the search | Examiner |
|---|---|---|
| THE HAGUE | 07 AUGUST 1991 | FLORES E. |

EPO FORM 1503 03.82 (P0401)